# EUROPÄISCHE PATENTANMELDUNG

(11) **EP 2 461 061 A2**
(43) Veröffentlichungstag der Anmeldung: **06.06.2012**
(21) Anmeldenummer: 11191033.7
(22) Anmeldetag: 29.11.2011
(51) Int. Cl.: F16C 33/58, B25B 27/06

(54) **Demontagewerkzeug zur Demontage eines Wälzlagers**

(30) Priorität: 02.12.2010 DE 102010062329
(71) Anmelder: Aktiebolaget SKF, 41 550 Göteborg (SE)
(72) Erfinder: Lulek, Andreas, 4431 Heidershofen (AT)
(74) Vertreter: Schonecke, Mitja

(57) **Zusammenfassung**

Die Erfindung betrifft ein Demontagewerkzeug zur Demontage eines Wälzlagers. Das erfindungsgemäße Demontagewerkzeug weist einen Grundkörper (27) mit einer wenigstens bereichsweise zylinderförmig ausgebildeten Mantelfläche (29) auf, die sich zwischen einer ersten axialen Endfläche (30) und einer zweiten axialen Endfläche (31) erstreckt. Weiterhin weist das Demontagewerkzeug mehrere Haltevorsprünge (33) zum Eingriff in eine Haltenut (18) eines Innenrings (2) des Wälzlagers auf. Die Haltevorsprünge (33) sind starr mit dem Grundkörper (27) verbunden, sind auf der Mantelfläche (29) ausgebildet, stehen radial nach außen über die Mantelfläche (29) über, erstrecken sich jeweils lediglich über einen Teilbereich des Umfangs der Mantelfläche (29) und sind über den Umfang der Mantelfläche (29) verteilt angeordnet.

## Beschreibung

Die Erfindung betrifft ein Demontagewerkzeug zur Demontage eines Wälzlagers, insbesondere eines Wälzlagers eines Elektromotors. Weiterhin betrifft die Erfindung eine System aus einem Demontagewerkzeug und einem Wälzlager sowie ein Verfahren zur Demontage eines Wälzlagers.

Wälzlager sind in einer Vielzahl von Ausführungsformen für viele verschiedene Anwendungen bekannt. Gerade bei Wälzlagern von sehr hochwertigen Komponenten, wie beispielsweise von Fahrmotoren für Schienenfahrzeuge, die über einen sehr langen Zeitraum genutzt werden, können ein Austausch oder eine Reparatur und damit eine Demontage des Wälzlagers erforderlich werden. Um den Aufwand für die Demontage und die Ausfallzeit der betroffenen Maschine möglichst gering zu halten, kommen häufig spezielle Demontagewerkzeuge zum Einsatz, die beispielsweise das Abziehen des Innenrings des Wälzlagers von einer Welle erleichtern. Hierzu kann am Innenring ein Gewinde zum Anschrauben des Demontagewerkzeugs vorgesehen sein.

Bei elektrischen Fahrmotoren und anderen Elektromotoren kann vorgesehen sein, das Wälzlager von seiner Einbauumgebung derart elektrisch zu isolieren, dass ein Stromdurchgang durch das Wälzlager, der in der Regel auf Dauer zu einer Schädigung des Wälzlagers führt, zuverlässig verhindert wird. Allerdings ist es produktionstechnisch sehr schwierig, ein für die Fixierung eines Demontagewerkzeugs vorgesehenes Gewinde beispielsweise durch eine Beschichtung elektrisch zu isolieren ohne dabei dessen Einsatzfähigkeit zu beeinträchtigen. Selbst wenn eine Beschichtung des Gewindes gelingt, besteht das Risiko, dass die Beschichtung beim Anbringen des Demontagewerkzeugs beschädigt wird. Es ist daher erforderlich, andere Maßnahmen zu ergreifen, die eine einfache Demontage des Wälzlagers ermöglichen.

Der Erfindung liegt die Aufgabe zugrunde, eine Demontage eines Wälzlagers mit wenig Aufwand zu ermöglichen.

Diese Aufgabe wird durch ein Demontagewerkzeug, ein System aus einem Wälzlager und einem Demontagewerkzeug sowie ein Verfahren zur Demontage eines Wälzlagers gemäß den nebengeordneten Ansprüchen gelöst.

Das erfindungsgemäße Demontagewerkzeug zur Demontage eines Wälzlagers weist einen Grundkörper mit einer wenigstens bereichsweise zylinderförmig ausgebildete Mantelfläche auf, die sich zwischen einer ersten axialen Endfläche und einer zweiten axialen Endfläche erstreckt. Weiterhin weist das Demontagewerkzeug mehrere Haltevorsprünge zum Eingriff in eine Haltenut eines Innenrings des Wälzlagers auf. Die Haltevorsprünge sind starr mit dem Grundkörper verbunden, sind auf der Mantelfläche ausgebildet, stehen radial nach außen über die Mantelfläche über, erstrecken sich jeweils lediglich über einen Teilbereich des Umfangs der Mantelfläche und sind über den Umfang der Mantelfläche verteilt angeordnet.

Das erfindungsgemäße Demontagewerkzeug hat den Vorteil, dass es eine Demontage eines Wälzlagers mit wenig Aufwand ermöglicht. Ein weiterer Vorteil besteht darin. Dass das Demontagewerkzeug leicht zu handhaben ist.

Die Haltevorsprünge können einteilig mit dem Grundkörper ausgebildet sein. Dadurch kann eine besonders hohe Festigkeit erreicht werden. Zudem können die Haltevorsprünge eine in Umfangsrichtung langgestreckte Form aufweisen. Weiterhin können die Haltevorsprünge gleichmäßig über den Umfang der Mantelfläche des Grundkörpers verteilt sein. Außerdem können die Haltevorsprünge jeweils im gleichen Abstand von der ersten axialen Endfläche des Grundkörpers angeordnet sein. Insbesondere können die Haltevorsprünge unmittelbar an die erste axiale Endfläche des Grundkörpers angrenzen. Die Haltevorsprünge können jeweils parallel zur ersten axialen Endfläche des Grundkörpers verlaufen. Der Grundkörper kann als ein Hohlzylinder ausgebildet sein.

Auf der Mantelfläche des Grundkörpers können mehrere Befestigungslaschen zur Befestigung an einem Außenring des Wälzlagers ausgebildet sein. Die Befestigungslaschen können radial nach außen über die Mantelfläche überstehen und über den Umfang der Mantelfläche verteilt angeordnet sein.

Mit Hilfe der Befestigungslaschen kann das Demontagewerkzeug zusätzlich zur Befestigung am Innenring, die über die Haltevorsprünge ausgebildet wird, am Außenring befestigt werden und somit das gesamte Wälzlager als eine Einheit demontiert werden.

Die Befestigungslaschen können starr mit dem Grundkörper verbunden sein. Insbesondere können die Befestigungslaschen einteilig mit dem Grundkörper ausgebildet sein. Die Befestigungslaschen können jeweils wenigstens eine axiale Durchgangsbohrung aufweisen. Weiterhin können die Befestigungslaschen eine kleinere Umfangserstreckung als die Haltevorsprünge aufweisen. Die Umfangsbereiche zwischen den Befestigungslaschen können ganz oder teilweise mit Material ausgefüllt sein. Insbesondere kann das Material einteilig mit den Befestigungslaschen ausgebildet sein. Dadurch kann sich im Extremfall ein ringförmiges Gebilde ergeben, das radial nach außen über die Mantelfläche des Grundkörpers übersteht und die Befestigungslaschen als integrale Bestandteile enthält. Eine derartige Abwandlung hat zwar etwas ungünstigere Sichtbedingungen bei der Demontage zur Folge, weist aber gegenüber separaten Befestigungslaschen eine erhöhte mechanische Stabilität auf.

Die Haltevorsprünge können in einer geringeren Entfernung von einer ersten axialen Endfläche angeordnet sein als die Befestigungslaschen. Insbesondere können die Haltevorsprünge bündig mit der ersten axialen Endfläche abschließen.

Die Befestigungslaschen können eine größere radiale Erstreckung als die Haltevorsprünge aufweisen. Eine derartige Geometrie erleichtert das Einführen des Demontagewerkzeugs in den Innenring und das Befestigen des Demontagewerkzeugs am Außenring.

Der Grundkörper kann eine zentrale, in Axialrichtung verlaufende Gewindebohrung aufweisen. In die Bohrung kann eine Abziehschraube eingeschraubt werden, mit der bei der Demontage eine sehr fein dosierbare Axialkraft ausgeübt werden kann. Der Grundkörper kann im Bereich der zweiten axialen Endfläche einen Boden aufweisen. Die Gewindebohrung kann im Boden des Grundkörpers ausgebildet sein.

Die Erfindung bezieht sich weiterhin auf ein System aus einem Wälzlager und einem erfindungsgemäß ausgebildeten Demontagewerkzeug zur Demontage des Wälzlagers. Das Wälzlager weist einen Innenring mit einer Bohrungsfläche auf, die zwischen einer ersten axialen Endfläche und einer zweiten axialen Endfläche des Innenrings ausgebildet ist. Im Bereich seiner Bohrungsfläche weist der Innenring eine Haltenut zum Fixieren des Demontagewerkzeugs auf, die als eine in Umfangsrichtung verlaufende radiale Vertiefung ausgebildet ist.

Die Haltenut kann sich durchgehend über den gesamten Innenumfang des Innenrings erstrecken. Dies hat den Vorteil, dass eine große Angriffsfläche für das Demontagewerkzeug zur Verfügung steht und demgemäß mit dem Demontagewerkzeug große Kräfte auf den Innenring ausgeübt werden können. Ebenso ist es auch möglich, dass die Haltenut in Umfangsrichtung mehrfach unterbrochen ist, und demgemäß mehrere separate Nutabschnitte aufweist.

Die Haltenut kann sich wenigstens bereichsweise radial nach innen erweitern. Dies wirkt sich beispielsweise positive auf die mechanische Belastbarkeit der Haltenut auf.

Der Innenring kann im Bereich der Bohrungsfläche mehrere Einführnuten aufweisen, die als in Axialrichtung verlaufende radiale Vertiefungen ausgebildet sind und in die Haltenut münden. Die Einführnuten erleichtern das Anbringen des Demontagewerkzeugs und ermöglichen eine sehr einfache konstruktive Ausgestaltung des Demontagewerkzeugs. Die Einführnuten können sich von der ersten axialen Endfläche des Innenrings bis zur Haltenut erstrecken. Weiterhin können die Einführnuten über den Umfang der Bohrungsfläche verteilt angeordnet sein. Insbesondere können die Einführnuten gleichmäßig über den Umfang der Bohrungsfläche verteilt sein. Die Einführnuten und/oder die Haltenut können wenigstens in einem Teilbereich ihres Querschnitts rechteckig ausgebildet sein.

Der Innenring kann im Bereich der Bohrungsfläche eine elektrisch isolierende Beschichtung aufweisen. Auf diese Weise kann das Wälzlager vor einem schädlichen Stromdurchgang geschützt werden. Der Innenring kann weiterhin im Bereich der ersten axialen Endfläche und/oder im Bereich der zweiten axialen Endfläche die elektrisch isolierende Beschichtung aufweisen. Dadurch ist der Schutz vor einem Stromdurchgang auch in einer Einbauumgebung sichergestellt, in welcher der Innenring axial an einer nicht isolierten Komponente anliegt. Bei der elektrisch isolierenden Beschichtung kann es sich beispielsweise ein Keramikmaterial oder um ein sonstiges elektrisch isolierendes Material handeln.

Die Haltenut und/oder die Einführnuten können wenigstens eine unbeschichtete Fläche aufweisen. Die unbeschichtete Fläche kann im Bereiche eines Nutbodens und/oder in an den Nutboden angrenzenden Bereichen von Nutwänden der Haltenut und/oder der Einführnuten ausgebildet sein. Dies erleichtert die Herstellung des Wälzlagers.

Die Haltenut und/oder die Einführnuten können wenigstens eine mit der isolierenden Beschichtung beschichtete Fläche aufweisen. Die beschichtete Fläche kann in Bereichen von Nutwänden der Haltenut und/oder der Einführnuten ausgebildet sein, die von einem Nutboden beabstandet sind. Dadurch kann auch bei einer nicht vollflächigen Beschichtung der Haltenut eine ausreichende elektrische Isolierwirkung erzielt werden. Insbesondere kann die beschichtete Fläche in Bereichen der Nutwände der Haltenut ausgebildet sein, in denen sich die Haltenut radial nach innen erweitert. In diesen Bereichen kann die Beschichtung mit einem vergleichsweise geringen Aufwand aufgebracht werden.

Die Haltenut kann Funktionsflächen und Abstandsflächen aufweisen, wobei die Funktionsflächen als Anlageflächen des Demontagewerkzeugs dienen und die Abstandsflächen, außerhalb der Funktionsflächen angeordnet und als mit der elektrisch isolierenden Beschichtung beschichtete Flächen ausgebildet sind. Auf diese Weise kann sowohl eine definierte mechanische Anlage des Demontagewerkzeugs als auch eine zuverlässige elektrische Isolierung realisiert werden.

Die Bohrungsfläche des Innenrings kann beidseits axial neben der Haltenut einen unterschiedlichen Durchmesser aufweisen. Insbesondere kann der Durchmesser der Bohrungsfläche zur ersten axialen Endfläche hin größer sein als zur zweiten axialen Endfläche hin. Dadurch wird Freiraum für das Einführen des Demontagewerkzeugs geschaffen.

Die Haltenut und/oder die Einführnuten können in einem Axialbereich der Bohrungsfläche des Innenrings angeordnet sein, der nicht mit den Wälzkörpern überlappt. Auf diese Weise können negative Auswirkungen der Haltenut und/oder der Einführnuten auf die Tragfähigkeit und die Lebensdauer des Wälzlagers weitgehend vermieden werden.

Der Außenring kann mehrere axial verlaufende Gewindebohrungen zur Befestigung des Demontagewerkzeugs am Außenring aufweisen.

Das Wälzlager kann als eine Komponente eines Elektromotors ausgebildet sein. Das Wälzlager kann beispielsweise als eine Komponente eines elektrischen Fahrmotors, insbesondere eines elektrischen Fahrmotors eines Schienenfahrzeugs, ausgebildet sein. Das Wälzlager kann als ein Radiallager, insbesondere als ein Radialzylinderrollenlager, ausgebildet sein.

Außerdem bezieht sich die Erfindung auf ein Verfahren zur Demontage eines Wälzlagers aus einer Einbauumgebung. Beim erfindungsgemäßen Verfahren wird ein Demontagewerkzeug partiell axial in einen Innenring des Wälzlagers eingeführt. Danach wird ein formschlüssiger Eingriff zwischen dem Demontagewerkzeug und dem Innenring hergestellt, indem das Demontagewerkzeug bei unveränderter axialer Position relativ zum Innenring verdreht wird. Dann wird das Wälzlager mit Hilfe des Demontagewerkzeugs axial aus der Montageumgebung entfernt.

Das erfindungsgemäße Verfahren ermöglicht eine schonende Demontage des Wälzlagers mit einem vergleichsweise geringen Aufwand.

Mit dem erfindungsgemäßen Verfahren kann das Wälzlager insbesondere von einer Welle oder einer Achse abgezogen werden. Außerdem kann das Wälzlager aus einem Gehäuse herausgezogen werden.

Beim axialen Einführen des Demontagewerkzeugs in den Innenring können radial nach außen weisende Haltevorsprünge des Demontagewerkzeugs in axial verlaufenden Einführnuten des Innenrings geführt werden.

Der formschlüssige Eingriff zwischen dem Demontagewerkzeug und dem Innenring kann durch ein Eingreifen der Haltevorsprünge des Demontagewerkzeugs in eine Haltenut des Innenrings ausgebildet werden.

Das Demontagewerkzeug kann an einem Außenring des Wälzlagers befestigt werden. Dadurch kann verhindert werden, dass bei der Demontage des Wälzlagers unzulässig hohe Kräfte in das Innere des Wälzlagers eingeleitet werden.

Die Erfindung wird nachfolgend anhand des in den Figuren dargestellten Ausführungsbeispiels erläutert.

Es zeigen:
- Figur 1: ein Ausführungsbeispiel eines erfindungsgemäß ausgebildeten Wälzlagers in Schnittdarstellung,
- Figur 2: das in Figur 1 dargestellte Ausführungsbeispiel des Wälzlagers in Seitenansicht,
- Figur 3: das in den Figuren 1 und 2 dargestellte Ausführungsbeispiel des Wälzlagers im montierten Zustand in Schnittdarstellung,
- Figur 4: ein Ausführungsbeispiel eines erfindungsgemäß ausgebildeten Demontagewerkzeugs in einer perspektivischen Darstellung,
- Figur 5: das in Figur 4 dargestellte Ausführungsbeispiel des Demontagewerkzeugs in einer weiteren perspektivischen Darstellung,
- Figur 6: das in den Figuren 1 bis 3 dargestellte Wälzlager während der Demontage mit dem in den Figuren 4 und 5 dargestellten Demontagewerkzeug in Schnittdarstellung und
- Figur 7: das in den Figuren 1 bis 3 dargestellte Wälzlager während der Demontage mit dem in den Figuren 4 und 5 dargestellten Demontagewerkzeug in Seitenansicht.

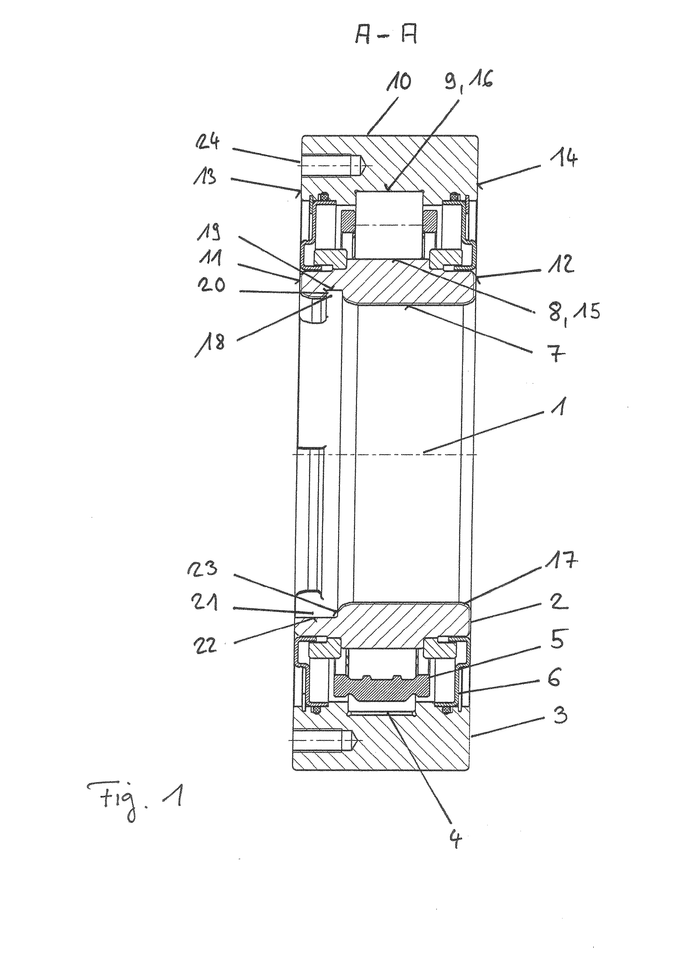

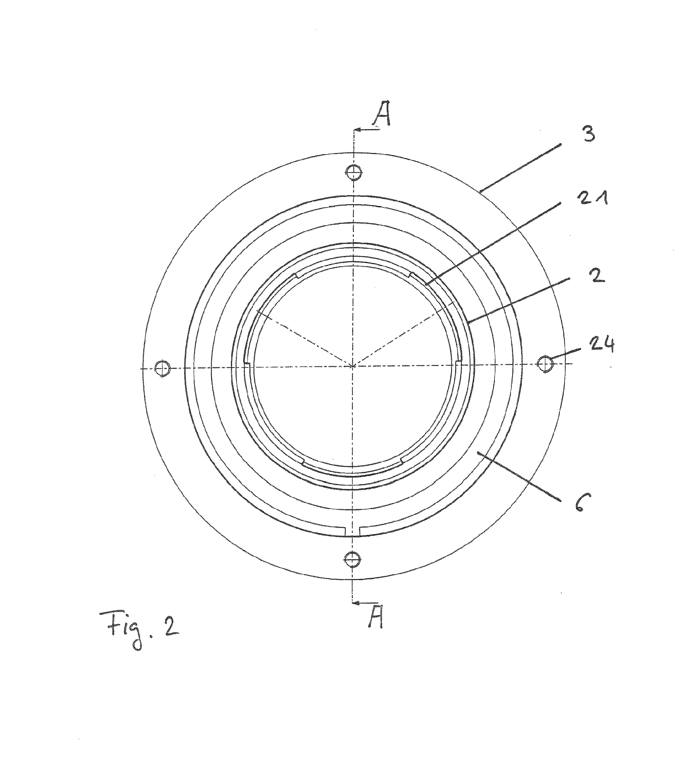

Figur 1 zeigt ein Ausführungsbeispiel eines Wälzlagers des erfindungsgemäßen Systems aus Wälzlager und Demontagevorrichtung in Schnittdarstellung. Eine zugehörige Seitenansicht ist in Figur 2 dargestellt.

In Figur 1 ist eine Rotationsachse 1 des Wälzlagers eingezeichnet, auf die jeweils etwaige Richtungsangaben bezogen sind, wenn nichts anderes gesagt ist. Demgemäß ist als Axialrichtung jede Richtung parallel zur Rotationsachse 1 und als Radialrichtung jede Richtung anzusehen, welche die Rotationsachse 1 senkrecht schneidet. Dabei bedeutet radial nach außen von der Rotationsachse 1 weg und radial nach innen zur Rotationsachse 1 hin gerichtet.

Das Wälzlager weist einen Innenring 2 und einen Außenring 3 auf, der den Innenring 2 radial umgibt. Im radialen Zwischenraum zwischen dem Innenring 2 und dem Außenring 3 rollen zylinderförmig ausgebildete Wälzkörper 4 ab. Dabei werden die Wälzkörper 4 in einem Käfig 5 geführt. Der radiale Zwischenraum zwischen dem Innenring 2 und dem Außenring 3 ist axial beidseits durch je eine Dichtung 6 abgedichtet, die insbesondere als eine Labyrinthdichtung ausgebildet sein kann. Der Innenring 2, der Außenring 3 und die Wälzkörper 4 sind aus Metall gefertigt.

Der Innenring 2 weist eine radial innere Umfangsfläche auf, die im Folgenden als Bohrungsfläche 7 bezeichnet wird und eine radial äußere Umfangsfläche, die im Folgenden als Mantelfläche 8 bezeichnet wird. In analoger Weise weist der Außenring 3 eine als Bohrungsfläche 9 bezeichnete radial innere Umfangsfläche und eine als Mantelfläche 10 bezeichnete radial äußere Umfangsfläche auf. Weiterhin weist der Innenring 2 eine erste axiale Endfläche 11 und eine zweite axiale Endfläche 12 auf, die jeweils die Bohrungsfläche 7 und die Mantelfläche 8 des Innenrings 2 miteinander verbinden. Der Außenring 3 weist eine erste axiale Endfläche 13 und eine zweite axiale Endfläche 14 auf, die jeweils die Bohrungsfläche 9 und die Mantelfläche 10 des Außenrings 3 miteinander verbinden.

Im Bereich der Mantelfläche 8 des Innenrings 2 ist eine innere Wälzkörperlaufbahn 15 ausgebildet. Im Bereich der Bohrungsfläche 9 des Außenrings 3 ist eine äußere Wälzkörperlaufbahn 16 ausgebildet. Die Wälzkörper 4 rollen auf der inneren Wälzkörperlaufbahn 15 und auf der äußeren Wälzkörperlaufbahn 16 ab.

Im Bereich der Bohrungsfläche 7 sowie der ersten axialen Endfläche 11 und der zweiten axialen Endfläche 12 des Innenrings 2 ist jeweils eine elektrisch isolierende Beschichtung 17 ausgebildet. Bei dieser Beschichtung 17 kann es sich beispielsweise um ein Keramikmaterial oder um ein sonstiges elektrisch isolierendes Material handeln.

Die Bohrungsfläche 7 des Innenrings 2 weist eine Haltenut 18 auf, die als eine in Umfangsrichtung verlaufende radiale Vertiefung ausgebildet ist und einen Nutboden 19 und Nutwände 20 aufweist. Beim dargestellten Ausführungsbeispiel ist die Haltenut 18 im Axialbereich zwischen der ersten axialen Endfläche 11 des Innenrings 2 und der inneren Wälzkörperlaufbahn 15 bzw. den Wälzkörpern 4 ausgebildet und erstreckt sich durchgehend über den gesamten Umfang der Bohrungsfläche 7 des Innenrings 2. Dabei weist die Haltenut 18 großteils, insbesondere in der Nähe des Nutbodens 19, einen rechteckigen Querschnitt auf. Radial einwärts im Anschluss an den rechteckigen Querschnitt erweitert sich die Haltenut 18 konisch. Im Bereich des Nutbodens 19 und den daran angrenzenden Bereichen der Nutwände 20 ist keine Beschichtung 17 vorhanden. Diese Bereiche dienen als Anlageflächen für ein nicht figürlich dargestelltes Demontagewerkzeug bei der Demontage des Wälzlagers und werden im Folgenden auch als Funktionsflächen bezeichnet. Die Beschichtung 17 beginnt erst dort, wo sich die Haltenut 18 konisch erweitert. Diese Bereiche dienen nicht als Anlageflächen für das Demontagewerkzeug, sondern als Abstandsflächen und liegen außerhalb der Funktionsflächen.

Im Axialbereich zwischen der ersten axialen Endfläche 11 des Innenrings 2 und der Haltenut 18 weist die Bohrungsfläche 7 einen größeren Durchmesser auf als im Axialbereich zwischen der zweiten axialen Endfläche 12 des Innenrings 2 und der Haltenut 18, d. h. der erstgenannte Axialbereich ist gegenüber dem zweitgenannten Axialbereich radial nach außen versetzt. Dies bedeutet auch, dass die Bohrungsfläche 7 des Innenrings 2 axial beidseits der Haltenut 18 einen unterschiedlichen Durchmesser aufweist.

Die Bohrungsfläche 7 des Innenrings 2 weist weiterhin drei Einführnuten 21 auf, die als in Axialrichtung verlaufende radiale Vertiefungen ausgebildet sind und jeweils einen Nutboden 22 und Nutwände 23 aufweisen. Die Einführnuten 21 sind in Umfangsrichtung der Bohrungsfläche 7 des Innenrings 2 äquidistant zueinander angeordnet und erstrecken sich jeweils von der ersten axialen Endfläche 11 des Innenrings 2 bis zur Haltenut 18 und münden übergangslos in die Haltenut 18. Die Einführnuten 21 weisen jeweils die gleiche Tiefe wie die Haltenut 18 auf, d. h. die Nutböden 22 der Einführnuten 21 und der Nutboden 19 der Haltenut 18 sind im gleichen radialen Abstand zur Rotationsachse 1 ausgebildet. Zusammen genommen erstrecken sich die Einführnuten 21 über mehr als die Hälfte der Umfangserstreckung der Bohrungsfläche 7 des Innenrings 2. Analog zu den Haltenuten 18 ist auch bei den Einführnuten 21 jeweils im Bereich des Nutbodens 22 und den daran angrenzenden Regionen der Nutwände 23 keine Beschichtung 17 vorhanden.

Wie bereits erwähnt, dienen die Haltenuten 18 der Fixierung des Demontagewerkzeugs. Die Einführnuten 21 ermöglichen es, das Demontagewerkzeug der Haltenut 18 zuzuführen.

Der Außenring 3 weist vier axiale Gewindebohrungen 24 auf, die jeweils als Sacklochbohrungen ausgebildet sind und sich ausgehend von der ersten axialen Endfläche 13 des Außenrings 3 über einen Teilbereich der axialen Breite des Außenrings 3 erstrecken. Die Gewindebohrungen 24 dienen der Befestigung des Demontagewerkzeugs.

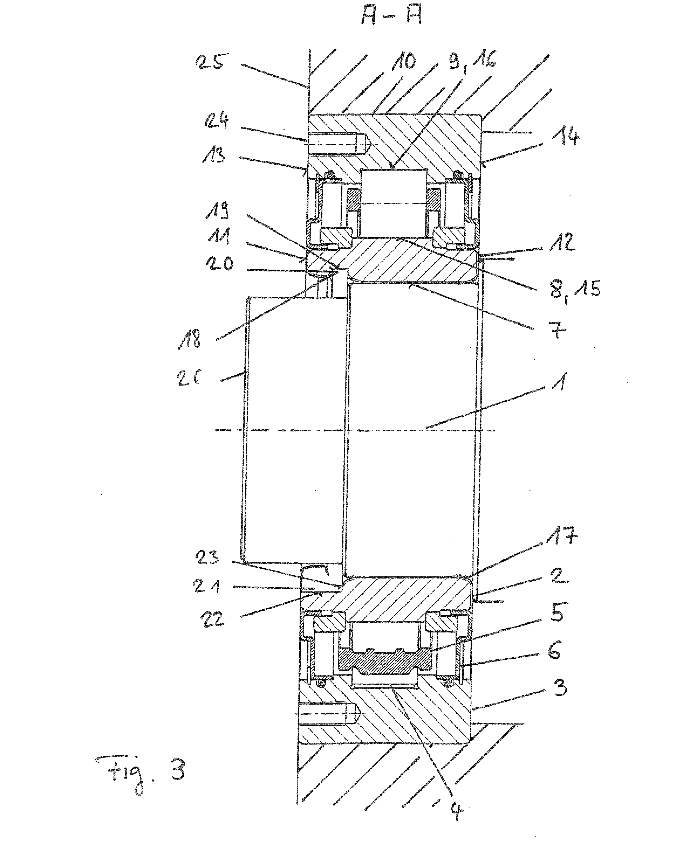

Figur 3 zeigt das in den Figuren 1 und 2 dargestellte Ausführungsbeispiel des Wälzlagers im montierten Zustand in Schnittdarstellung.

Das Wälzlager ist in einem Gehäuse 25 montiert und dient der drehbaren Lagerung einer Welle 26. Das Gehäuse 25 und die Welle 26 sind jeweils aus Metall gefertigt. Der Außenring 3 des Wälzlagers ist drehfest mit dem Gehäuse 25 verbunden. Die drehfeste Verbindung kann beispielsweise durch einen Pressverbund zwischen dem Außenring 3 und dem Gehäuse 25 realisiert sein. Dabei kann die Mantelfläche 10 des Außenrings 3 als eine Sitzfläche ausgebildet sein und radial gegen eine entsprechend ausgebildete Gegenfläche des Gehäuses 25 gepresst werden. Die radiale Pressung lässt sich durch ein Übermaß zwischen dem Außenring 3 und der aufnehmenden Bohrung des Gehäuses 25 erreichen.

Der Innenring 2 des Wälzlagers ist drehfest mit der Welle 26 verbunden. Die drehfeste Verbindung kann beispielsweise durch einen Pressverbund zwischen dem Innenring 2 und der Welle 26 realisiert sein. Dabei kann die Bohrungsfläche 7 des Innenrings 2 als eine Sitzfläche ausgebildet sein und radial gegen eine entsprechend ausgebildete Gegenfläche der Welle 26 gepresst werden. Die radiale Pressung lässt sich durch ein Übermaß zwischen der Welle 26 und dem Innenring 2 erreichen.

Der Innenring 2 liegt ausschließlich mit seiner Beschichtung 17 an der Welle 26 an. Es ist kein direkter Metall-Metall-Kontakt zwischen dem Innenring 2 und der Welle 26 ausgebildet. Dies bedeutet, dass der Innenring 2 gegen die Welle 26 elektrisch isoliert ist und somit kein nennenswerter Stromfluss zwischen dem Innenring 2 und der Welle 26 möglich ist. Somit kann es auch dann nicht zu einem nennenswerten Stromfluss durch das Wälzlager kommen, wenn das Gehäuse 25 und die Welle 26 auf einem unterschiedlichen elektrischen Potential liegen.

Die elektrische Isolation zwischen dem Innenring 2 und der Welle 26 wird auch nicht durch die Haltenut 18 und durch die Einführnuten 21 beeinträchtigt, obwohl jeweils im Bereich der Nutböden 19, 22 und in den angrenzenden Bereichen der Nutwände 20, 23 keine Beschichtung 17 vorhanden ist und dort somit blankes Metall vorliegt. Wie aus der Figur 3 hervorgeht, sind die blanken Bereiche des Innenrings 2, zu denen beim dargestellten Ausführungsbeispiel auch die Funktionsflächen der Haltenut 18 gehören, in einem Abstand zur Welle 26 angeordnet und berühren die Welle 26 nicht, so dass es nicht zu einer elektrisch leitenden Verbindung zwischen dem Innenring 2 und der Welle 26 kommt. Weiterhin ist aus Fig. 3 ersichtlich, dass zwischen der Welle 26 und der Bohrungsfläche 7 des Innenrings 2 bereichsweise ein radialer Spalt ausgebildet ist. Dieser Spalt resultiert zum einen aus dem radialen Versatz der Bohrungsfläche 7 des Innenrings 2 axial beidseits der Haltenut 18 und zum anderen aus der gestuften Ausbildung der Welle 26 beim dargestellten Ausführungsbeispiel und ermöglicht ein axiales Einführen des Demontagewerkzeugs. Die Ausgestaltung des Demontagewerkzeugs und die Vorgehensweise bei der Demontage des Wälzlagers werden im Folgenden noch näher erläutert.

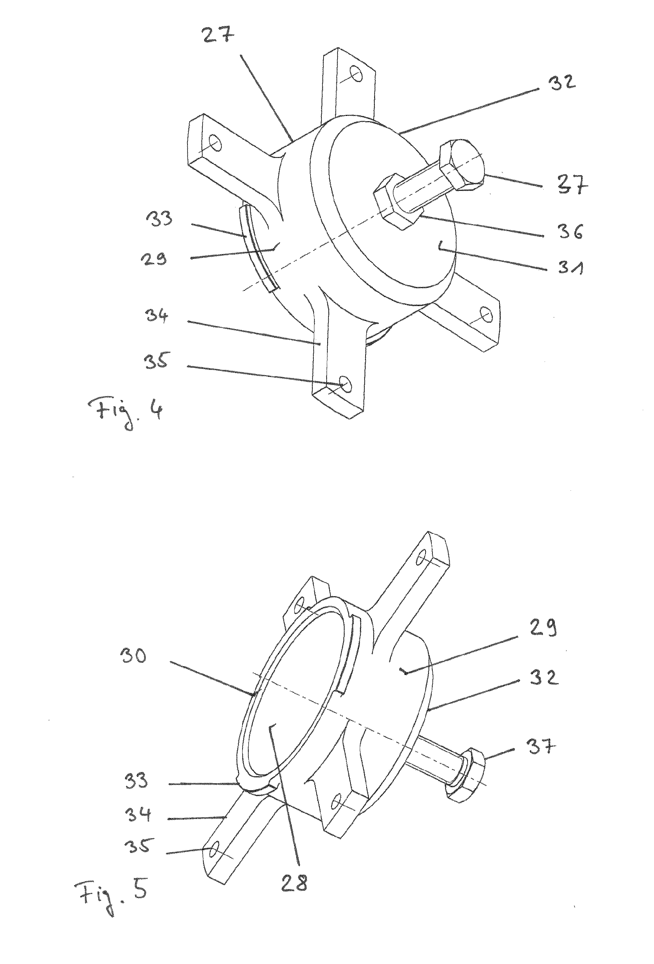

Figur 4 und Figur 5 zeigen ein Ausführungsbeispiel des Demontagewerkzeugs in unterschiedlichen perspektivischen Darstellungen.

Das Demontagewerkzeug weist einen hohlzylindrisch ausgebildeten Grundkörper 27 mit einer Bohrungsfläche 28 und einer Mantelfläche 29 auf. Die Bohrungsfläche 28 und die Mantelfläche 29 erstrecken sich jeweils zwischen einer ersten axialen Endfläche 30 und einer zweiten axialen Endfläche 31. Im Bereich der ersten axialen Endfläche 30 ist der Grundkörper 27 offen ausgebildet. Im Bereich der zweiten axialen Endfläche 31 weist der Grundkörper 27 einen geschlossenen Boden 32 auf.

Auf der Mantelfläche 29 des Grundkörpers 27 sind drei Haltevorsprünge 33 ausgebildet, die radial nach außen über die Mantelfläche 29 überstehen. Die Haltevorsprünge 33 sind als langgestreckte Erhebungen ausgebildet, die sich in Umfangsrichtung der Mantelfläche 29 erstrecken, einen rechteckigen Querschnitt aufweisen und starr mit dem Grundkörper 27 verbunden sind. Insbesondere sind die Haltevorsprünge 33 einteilig mit dem Grundkörper 27 ausgebildet. Die Haltevorsprünge 33 sind gleichmäßig über den Umfang der Mantelfläche 29 des Grundkörpers 27 verteilt und erstrecken sich in Axialrichtung bis zur ersten axialen Endfläche 30.

Weiterhin sind auf der Mantelfläche 29 des Grundkörpers 27 drei Befestigungslaschen 34 ausgebildet, die analog zu den Haltevorsprüngen 33 radial nach außen über die Mantelfläche 29 überstehen. Ebenso wie die Haltevorsprünge 33 sind auch die Befestigungslaschen 34 als langgestreckte Erhebungen ausgebildet, die sich in Umfangsrichtung der Mantelfläche 29 erstrecken, einen rechteckigen Querschnitt aufweisen, starr mit dem Grundkörper 27 verbunden, insbesondere einteilig mit dem Grundkörper 27 ausgebildet und gleichmäßig über den Umfang der Mantelfläche 29 des Grundkörpers 27 verteilt sind. Allerdings unterscheiden sich die Befestigungslaschen 34 hinsichtlich ihrer Abmessungen und auch hinsichtlich ihrer axialen Position deutlich von den Haltevorsprüngen 33. So weisen die Befestigungslaschen 34 in Umfangsrichtung der Mantelfläche 29 des Grundkörpers 27 eine geringere und in Radialrichtung eine vielfach größere Erstreckung als die Haltevorsprünge 33 auf. Außerdem erstrecken sich die Befestigungslaschen 34 nicht bis zur ersten axialen Endfläche 30 des Grundkörpers 27 sondern sind von dieser beabstandet angeordnet. In einem an die Mantelfläche 29 des Grundkörpers 27 angrenzenden Bereich weisen die Befestigungslaschen 34 eine radial nach außen abnehmende Umfangserstreckung auf. Radial außerhalb des so gebildeten Übergangsbereichs ist die Umfangserstreckung der Befestigungslaschen 34 konstant. In der Nähe ihrer maximalen radialen Erstreckung weisen die Befestigungslaschen 34 jeweils eine axiale Durchgangsbohrung 35 auf.

Bei einer Variante der Erfindung kann die räumliche Trennung zwischen den Befestigungslaschen 34 ganz oder teilweise aufgehoben sein, so dass die Befestigungslaschen 34 in Umfangsrichtung ineinander übergehen oder im Extremfall einen gemeinsamen Ringkörper ausbilden, der sich von der Mantelfläche 29 des Grundkörpers 27 radial nach außen erstreckt.

Im Zentrum des Bodens 32 des Grundkörpers 27 ist eine Schraubenmutter 36 angeordnet und drehfest mit dem Boden 32 verbunden. Die Schraubenmutter 36 ist insbesondere als eine Sechskantmutter ausgebildet. Weiterhin kann die Schraubenmutter 36 einteilig mit dem Grundkörper 27 ausgebildet sein. In die Schraubenmutter 36 ist eine Abziehschraube 37 eingeschraubt, die beispielsweise als eine Sechskantschraube ausgebildet sein kann.

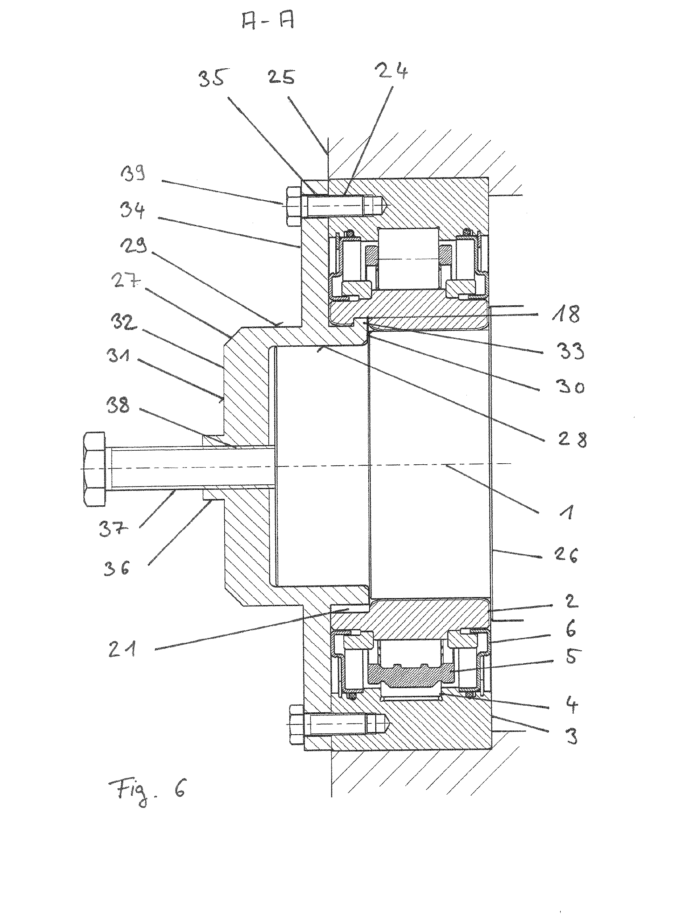

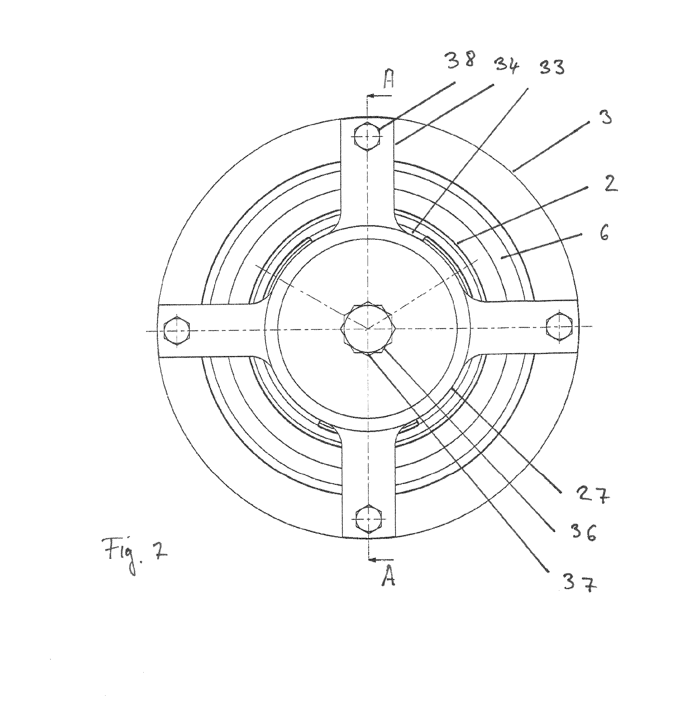

Figur 6 zeigt das in den Figuren 1 bis 3 dargestellte Wälzlager während der Demontage mit dem in den Figuren 4 und 5 dargestellten Demontagewerkzeug in Schnittdarstellung. Eine zugehörige Seitenansicht ist in Figur 7 dargestellt.

Bei dem in den Figuren 6 und 7 dargestellten Ausführungsbeispiel des Demontagewerkzeugs wird durch die Schraubenmutter 36 und den Boden 32 des Grundkörpers 27 gemeinsam eine in Axialrichtung verlaufende Gewindebohrung 38 ausgebildet.

Das Wälzlager ist im montierten Zustand analog zur Darstellung der Figur 3 über seinen Außenring 3 mit dem Gehäuse 25 und über seinen Innenring 2 mit der Welle 26 drehfest verbunden.

Zur Demontage des Wälzlagers wird die erste axiale Endfläche 30 des Grundkörpers 27 des Demontagewerkzeugs der ersten axialen Endfläche 11 des Innenrings 2 angenähert. Vor oder während der Annäherung wird der Grundkörper 27 des Demontagewerkzeugs koaxial zum Innenring 2 des Wälzlagers angeordnet und das Demontagewerkzeug relativ zum Innenring 2 so verdreht, dass jeder Haltevorsprung 33 des Grundkörpers 27 vollständig innerhalb des Umfangsbereichs einer der Einführnuten 21 des Innenrings 2 angeordnet ist. Schließlich wird der Grundkörper 27 des Demontagewerkzeugs axial auf die Welle 26 aufgeschoben und in die Bohrung 7 des Innenrings 2 eingeführt, wobei die Haltevorsprünge 33 des Grundkörpers 27 innerhalb der Einführnuten 21 des Innenrings 2 angeordnet sind.

Die axiale Vorschubbewegung des Grundkörpers 27 ist beendet, wenn die Haltevorsprünge 33 des Grundkörpers 27 vollständig im Axialbereich der Haltenut 18 des Innenrings 2 angeordnet sind. Diese axiale Endposition kann beispielsweise durch ein axiales Anschlagen der Haltevorsprünge 33 des Grundkörpers 27 an die parallel zur ersten axialen Endfläche 11 des Innenrings 2 verlaufenden Nutwände 23 der Einführnuten 21 oder durch ein axiales Anschlagen der Befestigungslaschen 34 am Innenring 2 und/oder am Außenring 3 ermittelt werden. Wenn die axiale Endposition erreicht ist, wird der Grundkörper 27 des Demontagewerkzeugs um einen vorgegebenen Drehwinkel verdreht, so dass die Haltevorsprünge 33 innerhalb der Haltenut 18 in Umfangsrichtung bewegt werden und dabei die Umfangsbereiche der Einführnuten 21 verlassen. Auf diese Weise wird ein formschlüssiger Eingriff der Haltevorsprünge 33 des Grundkörpers 27 in die Haltenut 18 des Innenrings 2 ausgebildet.

Wenn die Drehposition des Außenrings 3 des Wälzlagers relativ zum Innenring 2 während der axialen Vorschubbewegung des Grundkörpers 27 des Demontagewerkzeugs einen vorgegebenen Wert aufweist, fluchten die axialen Durchgangsbohrungen 35 der Befestigungslaschen 34 nach dem Verdrehen des Grundkörpers 27 um den vorgegebenen Drehwinkel mit den Gewindebohrungen 24 des Außenrings 3. Andernfalls ist es erforderlich, den Innenring 2 inklusive Demontagewerkzeug so weit zu verdrehen, bis die axialen Durchgangsbohrungen 35 der Befestigungslaschen 34 mit den Gewindebohrungen 24 des Außenrings 3 fluchten.

In einem nächsten Arbeitsschritt werden Befestigungsschrauben 39 durch die axialen Durchgangsbohrungen 35 der Befestigungslaschen 34 hindurch geführt und in die Gewindebohrungen 24 des Außenrings 3 eingeschraubt. Dadurch wird das Demontagewerkzeug zusätzlich zur Befestigung am Innenring 2, die durch den formschlüssigen Eingriff der Haltevorsprünge 33 in die Haltenut 18 erfolgt, auch am Außenring 3 befestigt.

Danach wird die Abziehschraube 37 weiter in die Gewindebohrung 38 eingeschraubt, bis sie axial an die Welle 26 anschlägt. Diese Situation ist in Figur 6 dargestellt.

Ein weiteres Einschrauben der Abziehschraube 37 in die Gewindebohrung 38 hat zur Folge, dass der Grundkörper 27 und die damit verbundenen Haltevorsprünge 33 und Befestigungslaschen 34 zunehmend axial von der Welle 26 entfernt werden. Da der Grundkörper 27 des Demontagewerkzeugs über die Haltevorsprünge 33 mit dem Innenring 2 des Wälzlagers und über die Befestigungslaschen 34 mit dem Außenring 3 des Wälzlagers verbunden ist, wird somit gleichermaßen der Innenring 2 von der Welle 26 abgezogen und der Außenring 3 aus dem Gehäuse 25 herausgezogen. Die relative axiale Position des Außenrings 3 zum Innenrings 2 ändert sich dabei nicht, so dass letztendlich das Wälzlager als eine Einheit zerstörungsfrei demontiert wird.

Wenn der Innenring 2 vollständig von der Welle 26 abgezogen ist und der Außenring 3 vollständig aus dem Gehäuse 25 herausgezogen ist, werden die Befestigungsschrauben 39 gelöst, welche die Befestigungslaschen 34 am Außenring 3 fixieren. Anschließend wird das Demontagewerkzeug so weit relativ zum Innenring 2 verdreht, dass die Haltevorsprünge 33 des Demontagewerkzeugs jeweils vollständig innerhalb der Umfangsbereiche der Einführnuten 21 des Innenrings 2 angeordnet sind und somit der formschlüssige Eingriff zwischen den Haltevorsprüngen 33 und der Haltenut 18 aufgehoben ist. Unter Beibehaltung dieser Drehposition wird das Demontagewerkzeug axial aus dem Innenring 2 herausgezogen. Damit ist das Demontageverfahren beendet.

### Bezugszeichenliste

- 1: Rotationsachse
- 2: Innenring
- 3: Außenring
- 4: Wälzkörper
- 5: Käfig
- 6: Dichtung
- 7: Bohrungsfläche
- 8: Mantelfläche
- 9: Bohrungsfläche
- 10: Mantelfläche
- 11: Erste axiale Endfläche
- 12: Zweite axiale Endfläche
- 13: Erste axiale Endfläche
- 14: Zweite axiale Endfläche
- 15: Innere Wälzkörperlaufbahn
- 16: Äußere Wälzkörperlaufbahn
- 17: Beschichtung
- 18: Haltenut
- 19: Nutboden
- 20: Nutwand
- 21: Einführnut
- 22: Nutboden
- 23: Nutwand
- 24: Gewindebohrung
- 25: Gehäuse
- 26: Welle
- 27: Grundkörper
- 28: Bohrungsfläche
- 29: Mantelfläche
- 30: Erste axiale Endfläche
- 31: Zweite axiale Endfläche
- 32: Boden
- 33: Haltevorsprünge
- 34: Befestigungslaschen
- 35: Durchgangsbohrung
- 36: Schraubenmutter
- 37: Abziehschraube
- 38: Gewindebohrung
- 39: Befestigungsschraube

## Patentansprüche

1. Demontagewerkzeug zur Demontage eines Wälzlagers mit
- einem Grundkörper (27), der eine wenigstens bereichsweise zylinderförmig ausgebildete Mantelfläche (29) aufweist, die sich zwischen einer ersten axialen Endfläche (30) und einer zweiten axialen Endfläche (31) erstreckt und
- mehreren Haltevorsprüngen (33) zum Eingriff in eine Haltenut (18) eines Innenrings (2) des Wälzlagers,
wobei die Haltevorsprünge (33)
- starr mit dem Grundkörper (27) verbunden sind,
- auf der Mantelfläche (29) ausgebildet sind,
- radial nach außen über die Mantelfläche (29) überstehen,
- sich jeweils lediglich über einen Teilbereich des Umfangs der Mantelfläche (29) erstrecken und
- über den Umfang der Mantelfläche (29) verteilt angeordnet sind.

2. Demontagewerkzeug nach Anspruch 1, wobei auf der Mantelfläche (29) des Grundkörpers (27) mehrere Befestigungslaschen (34) zur Befestigung an einem Außenring (3) des Wälzlagers ausgebildet sind, die Befestigungslaschen (34) radial nach außen über die Mantelfläche (29) überstehen und über den Umfang der Mantelfläche (29) verteilt angeordnet sind.

3. Demontagewerkzeug nach einem der vorhergehenden Ansprüche, wobei die Haltevorsprünge (33) in einer geringeren Entfernung von einer ersten axialen Endfläche (30) angeordnet sind als die Befestigungslaschen (34).

4. Demontagewerkzeug nach einem der vorhergehenden Ansprüche, wobei die Befestigungslaschen (34) eine größere radiale Erstreckung als die Haltevorsprünge (33) aufweisen.

5. Demontagewerkzeug nach einem der vorhergehenden Ansprüche, wobei der Grundkörper (27) eine zentrale, in Axialrichtung verlaufende Gewindebohrung (38) aufweist.

6. System aus einem Wälzlager und einem Demontagewerkzeug zur Demontage des Wälzlagers, wobei das Wälzlager einen Innenring (2), mit einer Bohrungsfläche (7) aufweist, die zwischen einer ersten axialen Endfläche (11) und einer zweiten axialen Endfläche (12) des Innenrings (2) ausgebildet ist und in deren Bereich der Innenring (2) eine Haltenut (18) zum Fixieren des Demontagewerkzeugs aufweist, die als eine in Umfangsrichtung verlaufende radiale Vertiefung ausgebildet ist und wobei das Demontagewerkzeug gemäß einem der vorhergehenden Ansprüche ausgebildet ist.

7. Verfahren zur Demontage eines Wälzlagers aus einer Einbauumgebung, wobei
- ein Demontagewerkzeug partiell axial in einen Innenring (2) des Wälzlagers eingeführt wird,
- ein formschlüssiger Eingriff zwischen dem Demontagewerkzeug und dem Innenring (2) hergestellt wird, indem das Demontagewerkzeug bei unveränderter axialer Position relativ zum Innenring (2) verdreht wird und
- dann das Wälzlager mit Hilfe des Demontagewerkzeugs axial aus der Einbauumgebung entfernt wird.

8. Verfahren nach Anspruch 7, wobei beim axialen Einführen des Demontagewerkzeugs in den Innenring (2) radial nach außen weisende Haltevorsprünge (33) des Demontagewerkzeugs in axial verlaufenden Einführnuten (21) des Innenrings (2) geführt werden.

9. Verfahren nach einem der Ansprüche 7 oder 8, wobei der formschlüssige Eingriff zwischen dem Demontagewerkzeug und dem Innenring (2) durch ein Eingreifen der Haltevorsprünge (33) des Demontagewerkzeugs in eine Haltenut (18) des Innenrings (2) ausgebildet wird.

10. Verfahren nach einem der Ansprüche 7 bis 9, wobei das Demontagewerkzeug an einem Außenring (3) des Wälzlagers befestigt wird.
